# EUROPEAN PATENT APPLICATION

(11) **EP 3 279 696 A1**
(43) Date of publication of application: **07.02.2018**
(21) Application number: 16182880.1
(22) Date of filing: 04.08.2016
(51) Int. Cl.: G01T 1/04

(54) **METHOD OF MAKING A RADIO-CHROMIC FILM DOSIMETER CONTAINING DITHIZONE DYE AND POLYSTYRENE BINDER TO BE USED FOR HIGH DOSE APPLICATION**

(71) Applicant: King Abdulaziz City for Science and Technology, Riyadh 11442 (SA)
(72) Inventor: BASFAR, Ahmed, 11442 RIYADH (SA); RABAEH, Khalid, 21166 IRBID (JO)
(74) Representative: Peguet, Wilfried

(57) **Abstract**

A radio-chromic film dosimeters based on polystyrene binder and dithizone dye are invented for high dose applications. The dose response of Dz-PS film dosimeters increases linearly with increase absorbed dose up to 100 kGy. The dose sensitivity of the films increases strongly with increase of concentrations of dithizone dye. The effects of irradiation temperature, relative humidity, dose rate and the stability of the response of the films after irradiation were investigated and found that these films could be used as routine dosimeter in industrial radiation processing.

## Description

### FIELD OF INVENTION

The present disclosure pertains to radio-chromic film dosimeter for high dose applications. More specifically the radio-chromic film is made up of polystyrene (PS) containing different concentrations of dithizone (Dz) dye are disclosed.

### BACKGROUND

New radiation processing applications are frequently introduced requiring a wide range of dosimetry control. These dosimetry systems are very essential to process control to assure that the correct dose is delivered. The needed doses range from few Grays for medical applications to high dose dosimetry using hundreds of kilo Grays in sterilization or degradation applications that is passed through food for irradiation, agriculture and polymers treatment applications. Radio-chromic films are one category of dosimeters which depend on permanent change in color due to a radiation-induced chemical changes. The film does not require any latent thermal, optical or chemical development or amplification. Beer's Law, simply stated, there is typically a correlation between the amount of a given material (created after exposing to radiation) and the intensity of light absorbed by that material. When that material has a certain color, the absorbed light by that material will appear on the visible spectrum with the related wavelength or range of wavelengths of that color.

There are various types of radio-chromic film dosimeters. The competition between these systems depends on their accuracy, the lower and higher dose to be measured and their behavior under different environmental conditions such as dose rate, temperature, humidity, etc.

A formyl violet cyanide liquid dosimetry system (Ebraheem, S., et. al. 2002) which depends on aqueous solution of formyl violet cyanide in the dose range 400 - 4000 Gy. This system was investigated for potential use in radiation dosimetry using both absorption and fluorescence. It was observed that the dose range depends on the concentration of the dye. There is a limitation of the targeted measured dose. There is a need to invent a system of dosimetry which can cover a wider range of doses to cover more applications of radiation technology especially the ones related to polymer crosslinking by radiation which involve radiation doses reaching hundreds of kGy.

Calderon, J. M., et.al.,( 2007) investigated ferrous ammonium sulfate as a high dose dosimeter in the range from 30 kGy to 550 kGy with very low temperatures in the range from 77 K (liquid Nitrogen) to 300 K. The analysis of the samples was made by UV spectroscopy and EPR, it was observed that the change in absorbance of the salt to radiation was linear with respect to the absorbed dose. In this study, it is very interesting to notice the high range of irradiation and at very low temperatures.

The effect of elevated temperature during irradiation on the well-known Harwell Red 4034 PMMA dosimeter was performed (Sidereas, P., et.al., 2007). The increase of temperature (different temperatures in the range from 25 to 55 °C) which may take place during commercial irradiation was investigated using both Harwell PMMA and KODAK Biomax alanine dosimeters. It was found that the effect of the temperature is greatest at the lower doses. The alanine dosimeter which tested under one temperature condition showed more stability.

Bhat, R. M., et.al.,(2008) evaluated the Garfilm-EM-250 micro thickness polyester film to be used as dosimeter for high dose applications. In this study, sheets of polyester of 250 micrometer in thickness were cut into small pieces and used as dosimetry films. These films were irradiated to doses from 20 to 220 kGy to study the dose response and other characteristics of the film, and the absorption spectra at wave length of 340 nm were measured. The stability of the film after irradiation was also studied together with the irradiation temperature and relative humidity effect on the dose response. From the results, the film showed very good linearity in the dose response curve. The film showed rapid decrease after irradiation during the first 24 hours, after that it showed stability which means that the film has to be read at least 24 hours after irradiation to have consistent reproducible results. The irradiation of the film in the temperature range from 10 to 50 °C exhibits a positive temperature coefficient of 0.45% per °C up to 40 °C. The film showed dependence on relative humidity (RH) during irradiation, and it reaches saturation after 75% RH. In conclusion the film can be used as routine dosimeter, but has to be pre-conditioned to specific water content and then sealed in aluminum/polyethylene sachets before using.

(Seito, H., et.al., (2009) conducted a study on the use of clear Perspex (poly methyl methacrylate) dosimeter and evaluated its characteristics. In his study the Radix W, commercially available un-dyed PMMA dosimeters were studied, in the dose range from 0.5 to 8.0 kGy, the characteristics of dose response, the effect of irradiation temperature and stability after irradiation were examined, and different wave lengths between 270-320 nm were used to read the absorbance. It was found that the suitable wave length is 280 nm for measuring the dose in the range from 0.5 to 8.0 kGy and the dose response is higher for higher temperature in the range of 20 - 40 °C, and it was found that the decrease in the dosimeter dose response is less than 1 % within 24 hours after irradiation. The clear PMMA dosimeter is very useful, since the range of 0.5 to 8.0 kGy is very useful in radiation processing especially in the food irradiation. But this dosimeter is limited when it comes to radiation processing of polymers applications. So, there is a need for dosimeters which can measure dose beyond 8 kGy.

Basfar et. al., (US8691135) showed a radio-chromic film dosimeter based on polyvinyl butyral (PVB) containing 3-(4,5-Dimethylthiazol-2-yl)-2,5-diphenyltetrazolium bromide (MMT) for high dose applications. The films showed good performance for dose measurements as routine dosimeters in the dose range of 5 - 40 kGy. Dosimeters capable of measuring absorbed doses beyond 40 kGy is still needed for the case of high dose industrial applications of radiation especially polymer and composites processing.

There seems to be a lack of a dosimetry system capable of measuring high industrial doses. Hence there is need for stable film dosimeters which can be used to measure industrial high absorbed doses especially for radiation processing of polymers and composites.

### SUMMARY

A novel Dyed PS films is being disclosed. In one embodiment, a Polystyrene (PS) based Dithizone (Dz) film dosimeters (Dz-PS) where prepared using toluene solvent to dissolve both of Dz dye and PS powder and to form a Dyed PS mixture. In another embodiment, a new composite of Dz-PS with different concentrations of Dz dye were made.

In another embodiment a thin layer of the mixer was spread on glass surfaces and Dyed PS film were made. In another embodiment, when the Dyed PS films was subjected to gamma radiation, the color of Dz-PS film changed from green to colorless and its complete de-coloration occurred at irradiation dose of 200 kGy. The Dyed PS films showed good performance for dose measurements as routine dosimeters in the dose range of 5 - 100kGy by measuring the absorbance of the irradiated films.

In one embodiment, the effect of various concentrations of Dz dye on dose response of Dyed PS films was investigated. The dose sensitivity of the films increases strongly with increase of concentrations of Dz dye. In another embodiment, the effects of irradiation temperature, relative humidity, dose rate and the stability of the response of the films after irradiation were investigated and found that these films could be used as routine dosimeter in industrial radiation processing.

The methods, composition and the use Dyed-PS film disclosed herein to make a radio-chromic dosimeter film may be made and used in any means for achieving various aspects, and may be executed using disclosed methods and chemicals or any modifications thereof. Other features will be apparent from the accompanying drawings and from the detailed description that follows.

### BRIEF DESCRIPTION OF DRAWINGS

Example embodiments are illustrated by way of example in the accompanying Fig. and like references indicate similar elements and in which:
Fig.1 shows a specific absorbance at 630 nm of 0.5, 0.1, and 0.2 Dz-PS film dosimeter as a function of absorbed dose.
Fig.2 shows a specific absorbance of 0.2mM 2 Dz-PS film dosimeters normalized with respect to that at an irradiation temperature of 20 °C as a function of irradiation temperature for (a) 10 kGy and (b) 20 kGy.
Fig.3 shows a specific absorbance of 0.2 mM Dz-PS film dosimeters normalized with respect to that at 12% relative humidity at (a) 10 kGy and (b) 20 kGy.
Fig.4 shows a specific absorbance of 0.2 mM Dz-PS film dosimeters irradiated with gamma and electron beam to different absorbed doses normalized to the value measured at an absorbed dose of 5 kGy.
Fig.5 shows a specific absorbance of 0.2 mM Dz-PS film dosimeters as function of storage time for 10 and 50 kGy.

Other features of the present embodiments will be apparent from the accompanying figures and from the detailed description that follows.

### DETAILED DESCRIPTION

In the instant invention polystyrene as a binder and dithizone as a dye are being made and used to measure high radiation exposure in samples used in industrial scale are disclosed.

Method of making the radio-chromic film dosimeter is as follows: Binder solution- Polystyrene (PS) solutions were prepared by dissolving 6.75 g PS powder (specific weight) (Mw = 280,000 g/M, Sigma-Aldrich, USA) in 150 ml toluene at room temperature of 30°C. The solution was magnetically stirred at this temperature for 4 hours and then left to cool to room temperature. After cooling to room temperature, PS solution (binder solution) was divided into 50 ml samples. Then, different (specific) concentrations of dithizone, i.e. 0.05, 0.1 and 0.2mM were added to 50 ml PS solution as a dye solution. Mixture of binder solution and dye solution were stirred continuously for 24 hours using a magnetic stirrer in order to obtain a uniformly dyed DT-PS solution. DT-PS solutions were poured onto a high levelled horizontal glass plates and dried at room temperature for about 72 hours to obtain Dyed PS films. Dyed PS Films were peeled off and cut into 1 x 3 cm pieces, dried, stored and prepared for irradiation. The drying is completed when the weight of the Dyed PS films is constant. The Dyed PS films were protected from sunlight, fluorescent light, moisture and dust by storing them in paper envelope and wrapping them with black plastic tape. The mean thickness of the obtained Dyed PS film is close to 45 ± 3*µm* which was measured by high precision digital micrometer (Mitutoyo-Japan).

Dyed PS films were irradiated with 1.25 MeV gamma-ray from ⁶⁰Co source Model GC-220 supplied by MDS Nordion, Canada at a mean dose rate of 8.4 kGy/h which connected to air chiller system, Turbo-Jet (Kinetics, USA) in order to monitor the temperature during irradiation. Three sampless were represented for each irradiation dose, but no significant differences in their characteristics were found during measurements. A range of 12-75% relative humidity levels were used to study the effect of humidity on the performance of film dosimeters during irradiation. These humidity levels were achieved using the following saturated salt solutions: LiCl (12%), MgCl₂ × 6H₂O (34%), Mg(NO₃)₂ × 6H₂O (55%) and NaCl (75%) according to the technique devised by (Levine, H., et.al., (1979). The Dyed PS films irradiated in a given humidity environment were kept in the same environment for 3 days before irradiation to ensure equilibrium conditions. The dose rate of the source was calibrated using ferrous sulphate dosimeter or fricke dosimeter (ASTM Standard Practice for using the fricke reference-Standard dosimetry system. 2004. ASTM E1026-04). At each dose point, three films were sandwiched together between two polystyrene (PS) blocks with 6 mm thickness in order to establish secondary charged particle equilibrium and the average is reported. The Dyed PS blocks were positioned at the center where absorbed dose is uniform. Electron beam irradiation was conducted at Sure Beam Middle East Corp. (SBE) irradiation facility in Riyadh, Saudi Arabia with two electron beam accelerators positioned vertically (tower and bit) at dose rate of 1 kGy/s and at room temperature. The electron beam parameters are listed in Table 1. Alanine pellet dosimeters were used as a reference dosimeter irradiated along developed films in accordance with ISO/ASTM 51607. Alanine pellet dosimeters are traceable to National Institute of Standard and Technology (NIST) in USA. Alanine dosimeters are measured by E-Scan EPR spectrometer (Bruker Biospin Company, Germany). Similar to gamma irradiation, three films were sandwiched together between two PS blocks in order to maintain electronic equilibrium during EB irradiation. The PS blocks were placed on the tray of conveyor system of EB accelerator.

**Table 1: Electron beam system operating parameters**

| **Parameter** | **Tower** | **Pit** |
|---|---|---|
| Beam Energy (MeV) | 10 | 10 |
| Average Beam Current (mA) | 1.43 | 1.6 |
| Average Beam Power (kW) | 14.3 | 16 |
| Scan Magnet Current (A) | 233 | 200 |
| Scan Width (cm) | 120 | 120 |
| Pulse Per Scan | 64 | 64 |
| Scan Frequency (Hz) | 5.05 | 5.26 |
| Pulse Repetition Rate (Hz) | 288 | 302 |

UV/VIS spectrophotometer is used to measure the absorbance of spectra of radiation in the near infrared (700-1100 nm), visible (350-700 nm) and ultra violet (190-350) nm regions. The absorption spectra of irradiated MMT samples in the wavelength range from 350-650 nm were measured using UV/VIS spectrophotometer, model Lambda 850, from Perkin-Elmer, USA. Three samples at each absorbed dose were measured, but no significant differences in their characteristics were found during measurements.

In general, evaluation of Dyed PS films followed ASTM standard guide for performance characterization of dosimeters and dosimetry systems for use in radiation processing, (Standard Guide for Performance Characterization of Dosimeters and Dosimetry Systems for Use in Radiation Processing. 2009. ASTM E2701-09).

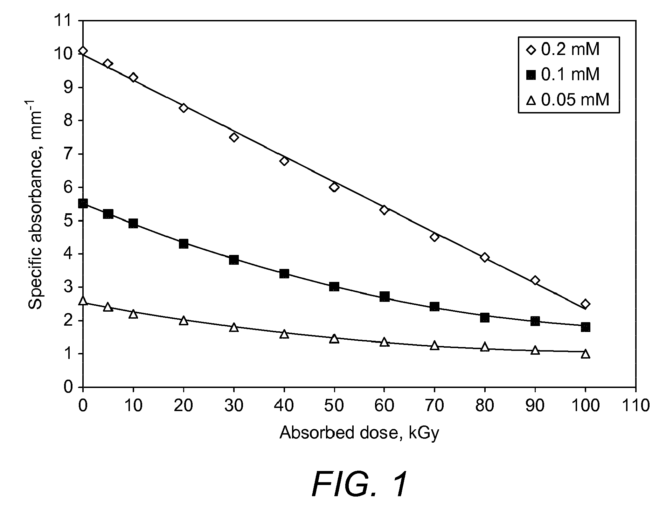

The effect of the dye concentrations on the response of the Dyed PS films was investigated by preparing different compositions of Dyed PS films. The dose response curves were established in terms of change in absorption peak measured at 630 nm per thickness in mm (specific value) versus the absorbed dose. The absorption spectra of unirradiated as well as irradiated Dyed PS films were measured in the range of 350 - 750 nm. The color bleaching of Dyed PS film increases gradually with increasing absorbed dose up to 100 kGy which can be seen from decrease of the individual relative absorbance-dose curve (see Fig. 1). As the absorbed dose increases, more hydrated electrons and free radicals are generated leading to breakage of dithizone dye, resulting in the disappearance of green color of Dyed PS films. The results show that dose sensitivity as well as the dose range increases with increase of dye concentration, indicating that films containing higher concentrations of the dithizone dye are more suitable for higher dose dosimetry (see Fig. 1).

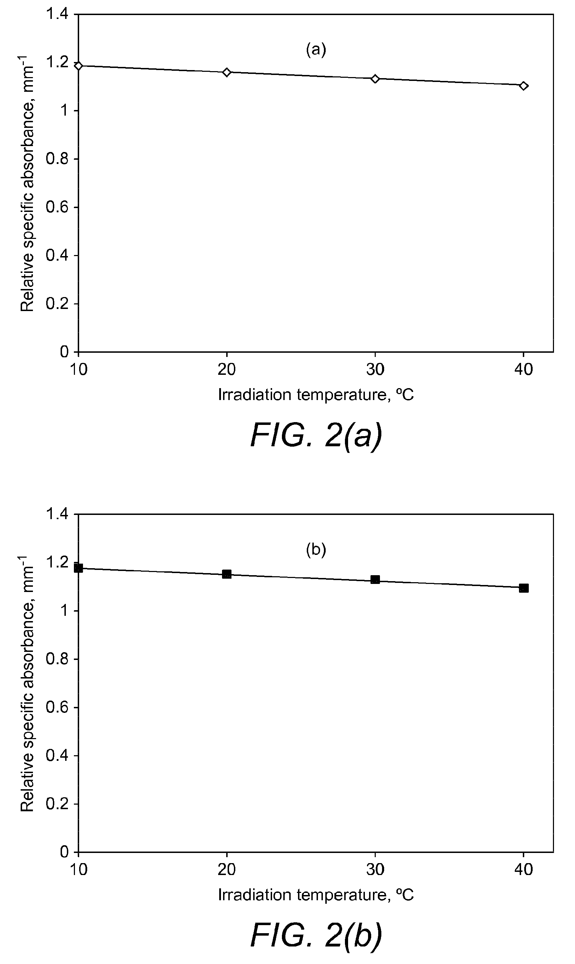

The effect of irradiation temperature on the response of Dyed PS films was investigated by irradiating film samples containing 0.2 mM Dz dye to 10 kGy and 20 kGy in the temperature range of 10 - 40 *°C.* A set of three films was used for each temperature. The variation in absorbance of the films was normalized with respect to the measured value at 40 *°C* (see Fig. 2 a and b). The results show that films depend slightly on irradiation temperature. Regarding routine radiation processing dosimetry, the response of the films has to be corrected under actual processing conditions (Sharpe, P. H. G. et.al., 2009).

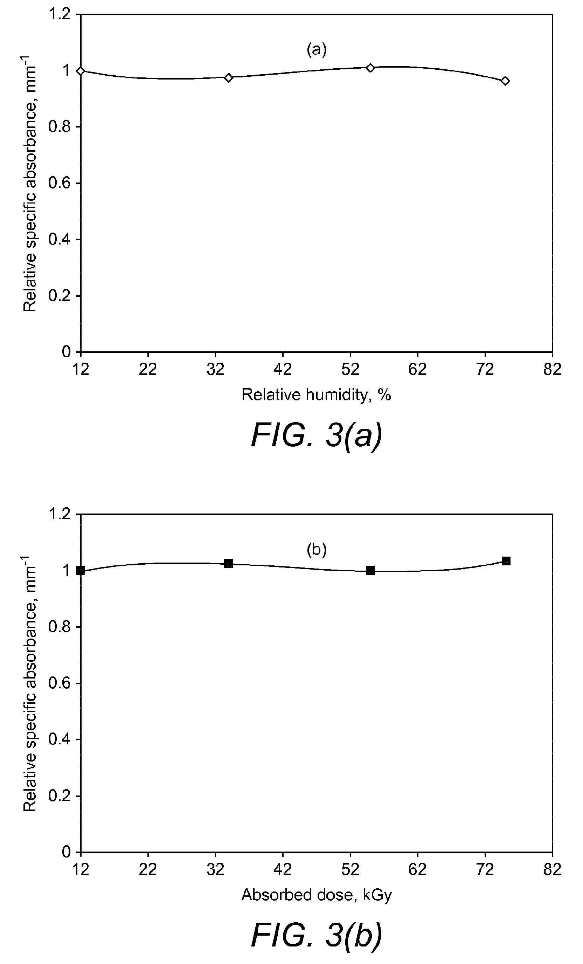

The effect of humidity on the Dyed PS films dosimeters was investigated by storing film samples containing 0.2 mM MR dye in vials in different humidity levels (12%, 34%, 55% and 74% relative humidity) for three days to establish equilibrium condition in accordance with (Standard Guide for Performance Characterization of Dosimeters and Dosimetry Systems for Use in Radiation Processing. 2009. DOI: 10.1520/E2701-09 ASTM E2701-09).The Dyed PS films were then irradiated in the same vials to 10, and 20 kGy, respectively. The variation in absorbance of the irradiated films (10 and 20 kGy) was normalized with respect to the value measured at 12% relative humidity (see Fig. 3 a and b). The results show that the dose response varies with changing relative humidity; therefore, the response of the films has to be corrected under actual processing conditions.

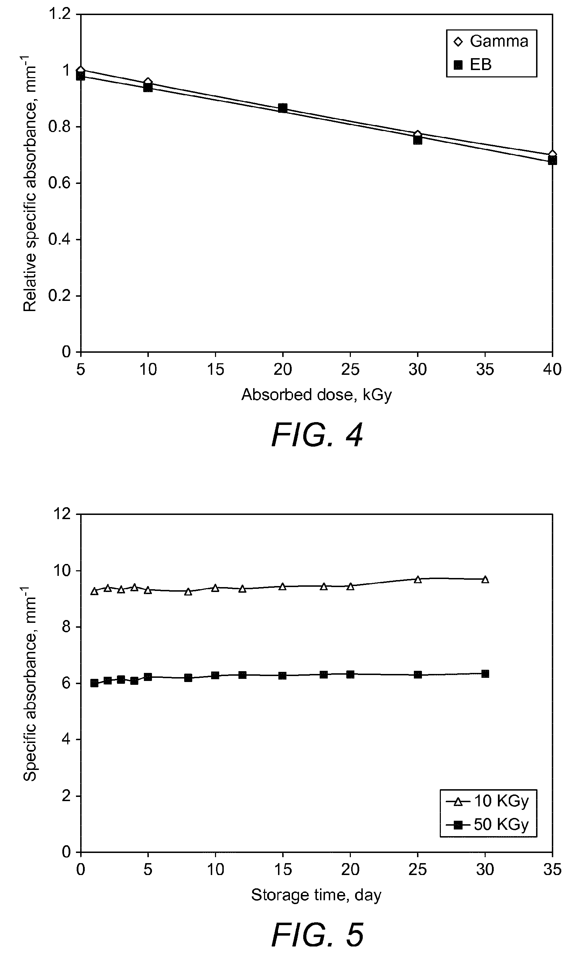

The effect of dose rate on the response of Dyed PS film dosimeters was investigated by using a dose rate of 8.4 kGy/h from a ⁶⁰Co source and an electron beam accelerator using a dose rate of 1 kGy/s (Sure Beam Middle East (SME) Co. in Riyadh, Saudi Arabia). Dyed PS film samples containing 0.2 mM dithizone dye were irradiated at a relative humidity of 50 % and at a temperature of 25 °C for absorbed doses of 5, 10, 20, 30 and 40 kGy. The variation in absorbance of the irradiated Dyed PS films was normalized with respect to the value measured at an absorbed dose of 5 kGy. Three dosimeters were irradiated for each dose point. It was found that there is no significant effect of dose rate on the response of the Dyed PS films dosimeters (see Fig. 4).

The stability of Dyed PS films was tested by measuring the absorbance of film containing 0.2 mM dithizone. The Dyed PS films were irradiated to 10 and 50 kGy and kept under normal laboratory conditions of temperature and humidity in the dark in accordance with ASTM (Standard Guide for Performance Characterization of Dosimeters and Dosimetry Systems for Use in Radiation Processing. 2009. DOI: 10.1520/E2701-09 ASTM E2701-09). A set of three films was used for each dose. The absorbance of the irradiated Dyed PS films was measured every 24 hours using UV/VIS spectrophotometer for 30 days after irradiation. The results show no change (less than ±2%; 1σ) in the specific absorbance of the film up to 30 days (see Fig. 5) which means that the Dyed PS films has high stability with a wide range of doses.

## Claims

1. A composition for a radio-chromic film dosimeter, comprising:
a Polystyrene (PS) as a binder at a specific weight between 1-10g using weight/weight;
a Dithizone dye at a specific concentration between 0.01-1 mM; and
a Toluene as a solvent to make the radio-chromic film dosimeter.

2. The composition of claim 1, wherein the specific concentration is at least one of 0.05, 0.1 and 0.2mM.

3. The composition of claim 1, wherein the specific weight is 6.75g.

4. The method of making radio-chromic film dosimeter, comprising:
dissolving a specific weight of polystyrene powder in 150 ml toluene at a room temperature of 30°C to form a PS solution;
stirring the PS solution using magnetic stirring technique at the room temperature for 4 hours;
cooling a stirred PS solution to the room temperature;
dividing the PS solution into several 50 ml samples;
adding a specific concentration of a dithizone to the PS solution;
stirring the mixture of dithizone to PS solution using magnetic stirrer continuously for 24 hours to obtain a dye PS (DT-PS) solution.

5. The method of claim 4, wherein the specific concentration is at least one of 0.05, 0.1 and 0.2mM.

6. The method of claim 4, wherein the specific weight is 6.75g.

7. The method of claim 4, further comprising:
pouring the DT-PS solutions onto a high levelled horizontal glass plates;
drying it at the room temperature for about 72 hours; and
peeling a Dye PS film off the high levelled horizontal glass plates and cutting into 1 x 3 cm pieces after a specific constant thickness was obtained to be dried, stored and prepared for irradiation.

8. The method of claim 7, further comprising:
protecting the Dye PS film from sunlight, fluorescent light, moisture and dust by storing them in a paper envelope and wrapping them with a black plastic tape.

9. The method of claim 7, wherein the specific thickness of the Dye PS film is 45 ± 3*µm*.

10. The method of claim 7, further comprising;
exposing the Dye PS film to a specific radiation level of 10-100 kGy.
